# FASCICULE DE BREVET EUROPEEN

(11) **EP 2 728 524 B1**
(45) Date de publication et mention de la délivrance du brevet: **06.09.2017**
(21) Numéro de dépôt: 13190813.9
(22) Date de dépôt: 30.10.2013
(51) Int. Cl.: G07B 15/00, G06Q 10/06, G06Q 50/12, G06Q 50/30, G06Q 50/14, G07C 9/00, G06Q 10/02, G06Q 10/08

(54) **Procédé de contrôle d'accès à un local par la lecture d'un code graphique présent sur un coupon d'accès, système et programme d'ordinateur associé**
Kontrollverfahren für den Zugang zu einem Raum durch Lesen eines Grafikcodes auf einem Zugangscoupon, System und entsprechendes Computerprogramm
Method for controlling access to a premise by reading a graphic code provided on an access coupon, related system and computer program

(30) Priorité: 31.10.2012 FR 1260442
(43) Date de publication de la demande: 07.05.2014
(73) Titulaire: Alpha Centauri, 92700 Colombes (FR)
(72) Inventeur: Buis, Frédéric, 92700 Colombes (FR); Le Noc, Eric, 44430 Le Loroux Bottereau (FR)
(74) Mandataire: Vidon Brevets & Stratégie

(56) Documents cités:
- EP-A1- 2 237 234
- US-A1- 2005 083 171
- US-A1- 2006 087 410
- US-A1- 2008 108 324
- US-A1- 2012 075 058

## Description

### 1. Domaine de l'invention

L'invention concerne le domaine du contrôle d'accès à un lieu sécurisé ou au moins conditionné par un paiement. L'invention s'applique plus particulièrement lorsque l'utilisateur dispose d'un coupon d'accès à un service comportant un code graphique, le système associe ce code graphique à un autre service tel que l'accès à un lieu.

### 2. Art antérieur

De nos jours, il existe de nombreuses manières de contrôler l'accès à un lieu sécurisé ou un local dont l'accès est conditionné par un paiement. Ces locaux sont par exemple, une entreprise, un cinéma, un hôtel, une maison particulière. L'accès à de tels locaux est accordé si l'utilisateur dispose d'un moyen d'accès matériel ou immatériel. Dans la catégorie des moyens d'accès immatériel, on trouve le code que l'utilisateur introduit sur le clavier d'un digicode par exemple. Dans ce cas, l'utilisateur doit se rappeler du code chaque fois qu'il veut accéder au local, et ne pas l'oublier. Ce type d'accès présente un autre inconvénient, celui d'être basé sur un secret, qui peut être découvert par des personnes non habilitées.

On peut également accéder à un local en présentant une caractéristique particulière de la personne autorisée, on parle alors d'identification biométrique de la personne. Les éléments biométriques les plus souvent utilisés sont : les empreintes digitales présentées sur un lecteur adapté (tactile ou visuel), l'identification vocale en prononçant une suite de mots devant un microphone, la forme du visage filmé par une caméra, le dessin de la rétine, etc. Ces techniques nécessitent de déterminer des caractéristiques physiques des personnes autorisées et de les référencer dans des bases de données. Les données biométriques utilisent des places mémoires importantes et la fiabilité de l'identification n'est pas toujours maximale. Ainsi, une personne dont la voix est enrouée, ne pourrait pas entrer dans le local sécurisé par reconnaissance vocale.

De nos jours, les cartes à puce sont utilisées pour de nombreuses applications et notamment le contrôle d'accès à des locaux. L'utilisation de tels objets permet une grande sécurité basée notamment sur la difficulté de reproduire une carte à puce authentique et/ou de découvrir les codes secrets qu'elle contient. En effet, le circuit intégré de la carte renferme une mémoire dont la lecture est verrouillée par une procédure sécurisée. Ce secret participe à un calcul cryptographique permettant au lecteur de carte de vérifier que la carte détient le bon code secret. Pour identifier le porteur de carte, on utilise généralement un code porteur que la personne autorisée est théoriquement la seule à connaître. Lorsque l'authentification est vérifiée, le système envoie un signal à la serrure et donne accès au local. Ce système nécessite de partager des secrets et de les mettre à jour régulièrement par des transferts sécurisés. La gestion de tels systèmes est lourde et demande des équipements coûteux. En effet, de tels systèmes exigent un niveau de sécurité homogène du fournisseur de services à l'utilisateur.

Dans certains cas, un nombre limité d'accès à un local est autorisé pour un seul utilisateur, ou pendant un laps de temps déterminé. Il n'est alors pas nécessaire d'utiliser un système sécurisé d'accès basé sur des clefs mémorisées dans des modules ou des cartes à puce. L'utilisateur peut par exemple, payer pour accéder au service et reçoit un code imprimé sur un ticket. L'utilisateur lit le code imprimé et le tape sur le clavier du système d'accès. Une fois que le nombre maximum d'accès est atteint, ou que la durée autorisée d'accès est terminée, le code est effacé de la mémoire du système d'accès supprimant ainsi toutes interventions ultérieures. Un tel système de contrôle nécessite l'impression d'un code qui peut se perdre ou être récupéré par des personnes non autorisées.

Le document JP 2009-162010 publié le 23 Juillet 2009, décrit une méthode d'accès à un local tel qu'une chambre d'hôtel. En frappant à la porte de la chambre, on ne peut dire son occupant est absent ou s'il dort. La solution consiste à lire un support par des lecteurs à l'intérieur ou à l'extérieur de la chambre et ainsi déterminer si la chambre est occupée ou non.

Le document JP 2008-157015 publié le 10 Juillet 2008 décrit un système de commande pour contrôler l'accès avec une serrure électrique et un lecteur de carte à un local tel qu'une chambre d'hôtel. Le lecteur verrouille et déverrouille la serrure électrique en fonction des données lues sur une carte.

Le document US 2006/087410 décrit un lecteur de badge donnant un accès transitoire à un local. Le lecteur transmet le numéro d'identification du visiteur à un serveur central en demandant si ce visiteur est autorisé à entrer. Si la personne est dûment authentifiée, la porte d'accès est déverrouillée.

Le document US2012/0075058 décrit un système dans lequel un code identifiant est généré à partir d'un droit d'accès, ce code étant transmis à une personne.

### 3. Objectifs de l'invention

On constate donc que les techniques classiques permettant de donner l'accès à des locaux sont mal adaptées lorsque le droit d'accès n'est accordé que de façon occasionnelle, où nécessite un contrôle manuel. La présente invention offre une solution mieux adaptée à ce type de circonstance.

### 4. Exposé de l'invention

En effet, selon un aspect fonctionnel, l'invention concerne un procédé de contrôle d'accès à un local déterminé pour un utilisateur incluant une étape préalable de création d'un coupon d'accès donnant accès à un service de voyage. Le coupon est un titre de transport reproduit permettant à cet utilisateur d'effectuer un voyage, un identifiant graphique étant intégré dans ledit coupon d'accès et associé avec des informations permettant d'effectuer ledit voyage lors de la lecture du coupon d'accès reproduit sur un support. Le procédé comporte en outre une étape de lecture du coupon à au moins un local déterminé indépendamment du voyage, et une étape ultérieure de déblocage d'une gâche électrique déclenchée par la lecture dudit identifiant graphique reproduit sur un support pour permettre l'accès à au moins un des locaux déterminés.

De cette manière, la lecture d'un code déclenche l'accès au local sans intervention humaine que celle de l'occupant du lieu.

Selon un mode particulier de réalisation, le procédé comporte une étape de réception et de reproduction sur un téléphone portable dudit coupon, la lecture du coupon sur le téléphone portable autorise alors l'accès à au moins un des locaux déterminés. De cette manière, le coupon d'accès peut être reçu à tout moment, et sans nécessité d'être imprimé. Dans tous les cas, les données participant à la création du code graphique contiennent au moins des caractéristiques identifiant ledit premier service et une donnée identifiant l'utilisateur. De cette manière, la lecture du code graphique permet la vérification de l'accès et l'identification de l'utilisateur.

Selon un autre mode de réalisation, le moment au cours duquel l'accès est accordé au local dépend l'identité de l'utilisateur associé au coupon d'accès. De cette manière, il est possible de définir des codes graphiques accordant continuellement l'accès au local, au personnel d'entretien par exemple, et d'autres codes qui n'accordent l'accès qu'à certains moments, pour les clients du lieu.

Selon un autre mode de réalisation, l'utilisateur introduit une commande indiquant qu'il quitte le local déterminé, cette commande déclenche l'émission d'un signal indiquant à d'autres personnes ayant une autorisation permanente que l'accès audit local est possible. De cette manière, le personnel d'entretien (ou tout autre personnel dûment habilité) n'est autorisé à entrer dans le local déterminé que s'il est inoccupé.

L'invention concerne également un système de contrôle d'accès à un local déterminé pour un utilisateur comprenant un moyen de création d'un coupon d'accès donnant accès à un service de voyage. Le coupon est un titre de transport reproduit permettant à cet utilisateur d'effectuer un voyage un identifiant graphique étant intégré dans ledit coupon d'accès et associé avec des informations permettant d'effectuer ledit voyage lors de la lecture du coupon d'accès reproduit sur un support. Le système comporte un boîtier de commande d'une gâche électrique placé à au moins un local déterminé indépendamment du voyage, le coupon permettant l'accès au local déterminé, ledit boîtier comportant un lecteur optique, ledit boîtier déclenche le déblocage de la gâche électrique lors de la lecture dudit identifiant graphique reproduit sur un support.

Selon un autre aspect matériel, l'invention concerne également un programme d'ordinateur comprenant des instructions de code de programme pour la mise en oeuvre d'une étape de contrôle d'accès à un local incluse dans un procédé tel que décrit plus haut lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 présente un schéma d'un système de contrôle d'accès dans lequel l'invention est mise en oeuvre ;
- la figure 2 est un exemple d'ordinogramme présentant des étapes pour un mode particulier de réalisation de l'invention ;
- la figure 3 montre un tableau associant les données encodant le code graphique, et les informations relatives à un second service ; et
- la figure 4 présente un message affiché sur l'écran d'un téléphone portable informant l'utilisateur qu'il a accès à un second service.

### 6. Description d'un mode de réalisation de l'invention

### 6.1 Principe général

Le principe général de l'invention repose sur un système de contrôle d'accès utilisant un coupon d'accès permettant à un utilisateur d'accéder à un local déterminé. Un coupon d'accès au local déterminé est d'abord créé pour autoriser par exemple l'accès à une chambre d'hôtel, le coupon d'accès comporte un code graphique identifiant au moins l'utilisateur. Puis, l'utilisateur arrive devant la porte du local déterminé et présente le coupon d'accès qui est sous une forme papier ou affiché sur un écran d'un téléphone portable par exemple. Le coupon d'accès est lu par un lecteur qui compare le code graphique lu avec un code de référence, et en cas d'égalité envoie un signal à la serrure électrique pour débloquer la porte. Le serveur en retour enregistre l'accès au local déterminé en identifiant le client comme celui autorisé à pénétrer dans ce local.

Selon un mode particulier de réalisation, le coupon est créé pour accorder l'accès à un premier service différent de l'accès au local déterminé, ce premier service étant par exemple un voyage. Le code graphique est associé au droit d'accès du local déterminé et les informations d'associations sont transmises au gestionnaire d'accès de l'endroit déterminé. Lorsque l'utilisateur se présente sur le lieu délivrant ce second service, il lui suffit de montrer le code graphique à un lecteur pour y avoir accès. De cette façon, le coupon d'accès sert à un second usage qui n'avait pas été prévu au départ.

### 6.2 Description d'un mode de réalisation

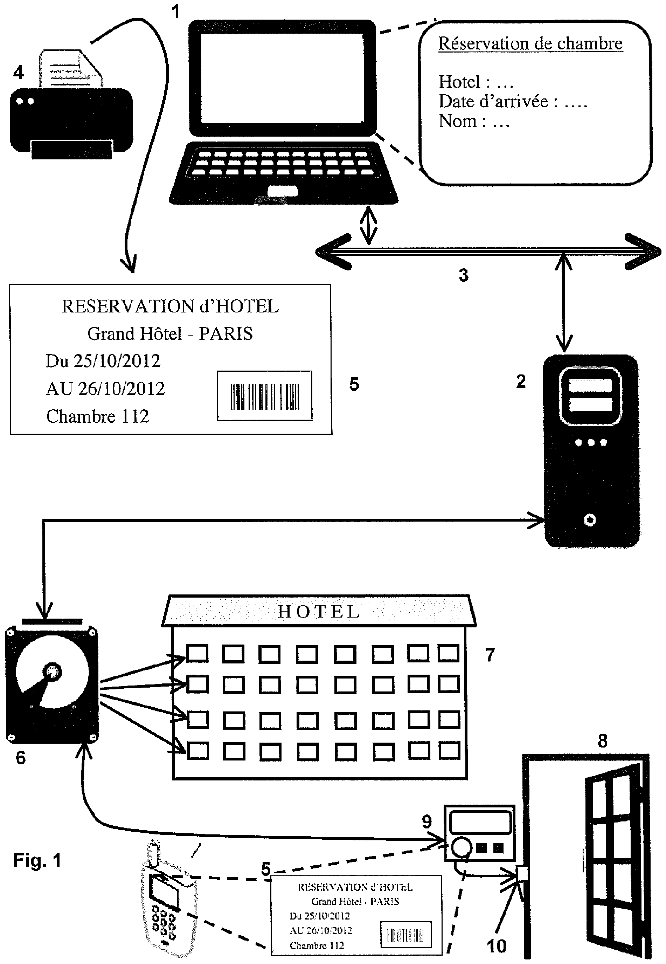

La **FIG.1** illustre un premier mode de mise en oeuvre de l'invention au sein d'un premier système de contrôle d'accès, qui permet pour un utilisateur d'autoriser l'accès à un local en utilisant un coupon d'accès.

Dans l'exemple de mise en oeuvre décrit ici, un utilisateur communique avec une centrale de réservation de chambre d'hôtel à l'aide de son ordinateur personnel 1. L'écran et le clavier de son ordinateur constitue l'interface homme machine (IHM) lui permettant d'entrer les informations de réservation telles que : le nom de la personne occupant la chambre, le nom de l'hôtel, la date et l'heure d'arrivée, et des informations de personnalisation telles que : l'étage, fumeur ou non-fumeur, salle de bain ou douche, parking, température de la chambre, etc. L'ordinateur 1 communique avec un serveur 2 gérant les services et notamment les réservations d'hôtel à travers un réseau de communication 3, le réseau Internet par exemple. Dans certain cas, l'utilisateur est en communication téléphonique avec un opérateur qui entre les données dans le serveur 2. Selon une première variante de réalisation, une fois la réservation faite et éventuellement payée, l'utilisateur peut imprimer son coupon d'accès 5 sur une imprimante 4 connectée à l'ordinateur 1. Selon une seconde variante, le coupon d'accès est dématérialisé et accessible sous la forme d'un affichage sur l'écran d'un téléphone portable. Selon l'invention, le coupon comporte un code graphique, qui est typiquement un code à barre, ou un QR code. Le code QR est un type de code-barres en deux dimensions constitué de modules noirs disposés dans un carré à fond blanc. On trouve différents codes comprenant des nombres différents de points noirs ou blancs allant de 21 par 21 points, 25 par 25, 29 par 29 jusqu'à 177 par 177. Des Codes Correcteurs d'Erreurs permettent de corriger des erreurs de lecture.

Le serveur 2 du gestionnaire de service comporte une mémoire qui contient des données relatives aux services sélectionnés par l'utilisateur, et des données personnelles aux utilisateurs. Dans le cas d'une réservation d'hôtel, les données relatives sont :
- l'adresse et le nom de l'hôtel,
- le numéro de chambre,
- les horaires d'accès,
- des informations complémentaires sur le service délivré.

Les données personnelles de l'utilisateur sont par exemple :
- numéro de téléphone portable
- âge,
- langue,
- habitudes alimentaires (kacher, végétarien), présence d'allergie, heure de repas,
- température favorite de la chambre d'hôtel,
- programme de télévision favori,
- etc.

Ces informations peuvent être obtenues lors de la réservation à l'aide d'un questionnaire proposé à l'utilisateur sur l'écran du terminal. Ces informations peuvent aussi être obtenues par analyse des habitudes de l'utilisateur au cours des précédentes réservations.

Le serveur 2 communique via le réseau 3 avec une pluralité de terminaux d'utilisateurs et via le même réseau ou un réseau différent avec au moins un au serveur de contrôle 6 gérant les accès aux chambres de l'hôtel 7 spécifié dans la réservation. La chambre est fermée par une porte dont l'ouverture est contrôlée par un boîtier électronique 9 et une gâche électrique 10. Le boîtier électronique 9 contient une interface de communication avec le serveur de contrôle 6, et commande en ouverture et fermeture la gâche électrique 10. Le boitier électronique 9 comporte une unité centrale, une mémoire de données, et une interface utilisateur constituée d'un lecteur optique (caméra ou lecteur laser), d'un écran tactile. En variante, l'interface utilisateur est constituée de quelques touches et d'un écran séparé, ou d'un écran permettant la validation d'icônes de commande. Une variante consiste en ce que l'écran est tactile. L'unité centrale est associée à un programme de traitement des signaux provenant du lecteur optique, ce programme est conçu notamment pour scanner des codes graphiques. Le serveur de contrôle 6 peut entrer en communication avec tous les boîtiers électroniques 9 commandant l'accès aux locaux du bâtiment.

Lorsque l'utilisateur arrive à l'hôtel sélectionné, il présente le coupon d'accès imprimé ou son téléphone portable devant le lecteur optique commandant l'entrée de l'hôtel. Le lecteur optique détecte la présence du code graphique reproduit dans le coupon et transmet les données au serveur de contrôle 6. Le serveur de contrôle compare les données lues avec celles transmises par le serveur 2 et en cas d'égalité transmet un signal de déblocage de la porte d'entrée. Avantageusement, le lecteur est équipé d'un écran qui affiche un message de bienvenue personnalisé en indiquant le nom de la personne et son numéro de chambre. L'utilisateur se présente ensuite devant la porte de la chambre et fait lire le coupon d'accès au lecteur optique du boîtier électrique 9. Le boîtier transmet les données du code graphique lu au serveur de contrôle 6 qui vérifie notamment si l'utilisateur se trouve devant la porte de la chambre réservée. Si cela est bien le cas, le serveur de contrôle 6 accorde l'accès et envoie un signal de déverrouillage de la gâche électrique 10 au boîtier électronique 9. L'utilisateur peut alors entrer dans sa chambre.

### 6.3 Description de modes de réalisation particulier

Selon un mode particulier de réalisation, le coupon est créé pour accorder l'accès à un premier service différent de l'accès au local déterminé, dans ce cas, le gestionnaire du local déterminé doit récupérer à un moment ou un autre les données du coupon, et notamment le code graphique. Si l'utilisateur commande un voyage et qu'un accès à une chambre est compris dans le voyage, alors le voyagiste peut immédiatement informer le serveur de contrôle 6 de ce droit d'accès. Dans le cas d'un vol annulé, le code graphique qui est reproduit sur le coupon est lu et associé à un droit d'accès au local déterminé, une chambre d'hôtel typiquement.

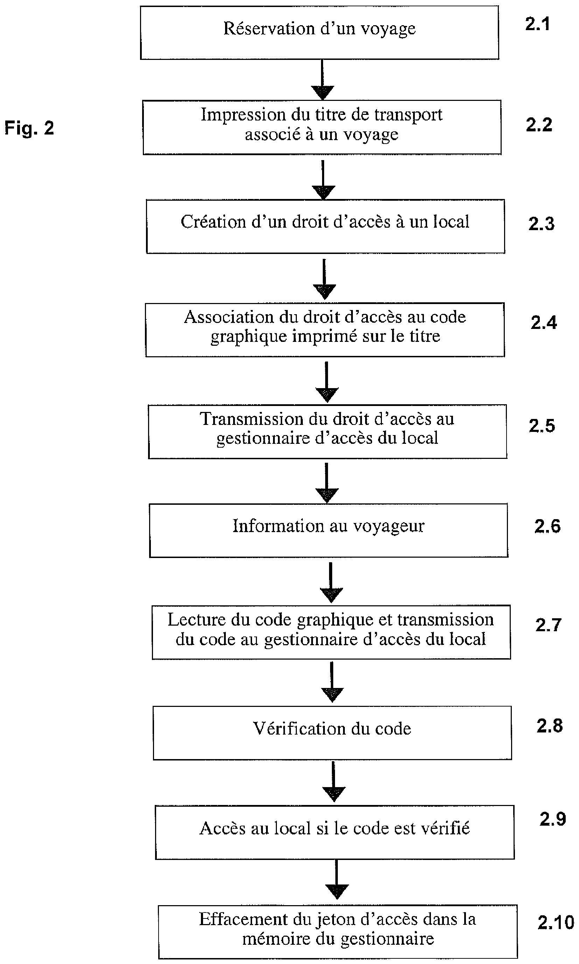

La **FIG.2** présente un ordinogramme d'un mode de réalisation dans lequel le coupon d'accès permet l'accès à un premier service différent de celui d'accéder à un local.

Selon ce mode particulier de réalisation, un utilisateur communique le serveur 2 de gestion des services afin de réserver un voyage (étape 2.1). Un exemple d'itinéraire sélectionné par l'utilisateur est un vol de NANTES à PARIS, en date du 25 Octobre 2012 départ à 20h00, et l'identité de l'utilisateur est Monsieur M.M. L'utilisateur valide son voyage et le serveur 2 de gestion des services enregistre les informations décrivant celui-ci telles que :
- lieux de départ et d'arrivée,
- horaires de départ et d'arrivée,
- utilisateur du voyage,
- adresse de l'utilisateur du voyage,
- numéro de téléphone de l'utilisateur du voyage,
- adresse e.mail de l'utilisateur du voyage,
- numéro de carte de fidélité,
- données personnelles de l'utilisateur du voyage.
- etc.

Le serveur 2 calcule alors un code graphique encodant des données identifiant l'utilisateur et le voyage sélectionné. Ces informations participant au calcul du code graphique sont notamment :
- lieux de départ et d'arrivée,
- horaires de départ et d'arrivée,
- utilisateur du voyage,.

Le code graphique est destiné à être un identifiant du premier service sélectionné par l'utilisateur, en l'occurrence un voyage. Le fait que les informations encodées comprennent des données identifiant un voyage en particulier permet de ne pas produire deux fois le même code graphique. Le code graphique (ou les données participant à son encodage) et toutes les informations relatives au voyage sont transmise au terminal de l'utilisateur à des fins d'impression. A l'étape 2.2, l'utilisateur imprime son titre de transport qui comporte notamment le code graphique tel qu'un QR code. Selon une variante de réalisation, l'utilisateur reçoit le titre de transport sous forme dématérialisée dans son téléphone portable.

Puis, l'utilisateur se rend au point de départ de son voyage. Il se présente au contrôle d'entrée et présente son titre de transport (soit sous forme papier, soit affiché sur l'écran, de son téléphone portable) pour un scan du code graphique. En temps normal, l'utilisateur embarque dans le moyen de transport qu'il a choisi et effectue son voyage à l'issue duquel son titre de transport ne lui sert plus à rien. Dans le contexte de la présente invention, le voyagiste propose à l'utilisateur un autre service associé à ce voyage, un billet retour gratuit, ou plus simplement une nuit dans un hôtel. Ce second service peut être proposé car le vol est retardé, ou pour récompenser la fidélité de l'utilisateur, ou pour toutes autres raisons. De même, ce second service peut être délivré en plusieurs fois, c'est le cas lorsque le titre de transport donne l'accès à une chambre d'hôtel et à un restaurant, et permet également d'ouvrir la porte pour accéder au parking.

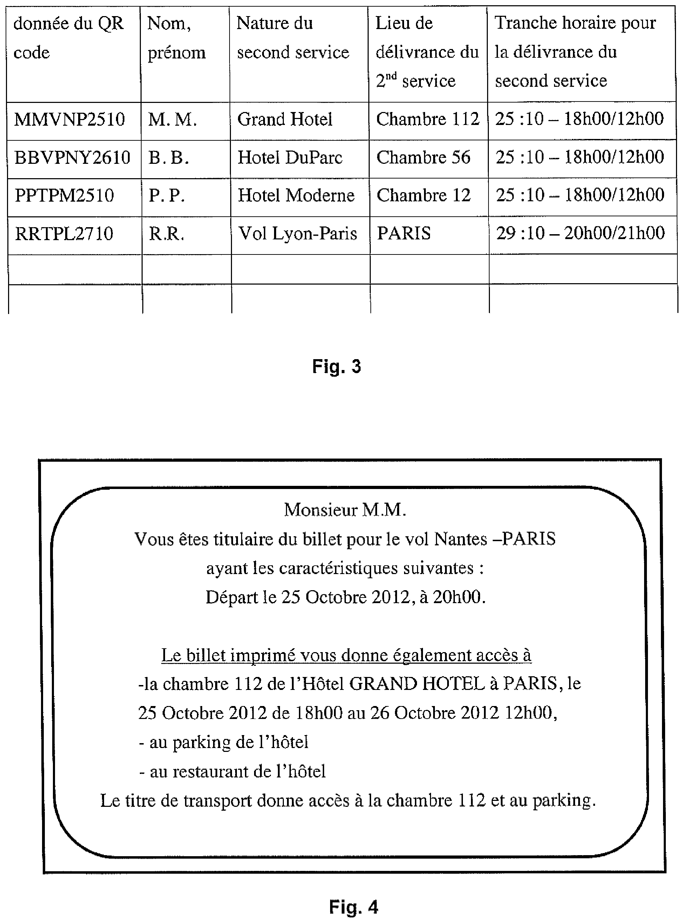

Si l'utilisateur accepte la proposition du voyagiste, le serveur 2 de gestion des services élabore un droit d'accès à un certain local, une chambre d'hôtel par exemple, pour cet utilisateur et pour une fenêtre temporelle déterminée, par exemple la nuit suivante (étape 2.3). Puis, à l'étape 2.4, le serveur 2 associe la donnée du code graphique imprimé sur le titre de transport aux informations définissant le droit d'accès à ce second service dont l'utilisateur va pouvoir bénéficier. Eventuellement, le serveur 2 entre en communication avec le serveur de contrôle 6 pour vérifier la disponibilité de ce second service, par exemple en définissant le numéro de chambre. Le serveur 2 met à jour dans sa mémoire un tableau associant les données encodant le code graphique, et les informations relatives à ce second service. Un exemple d'un tel tableau est montré à la FIG. 3. On peut voir sur ce tableau que les données de l'identifiant graphique dont les données sont MMVNP2510 (Vol Nantes Paris le 25 octobre dont le bénéficiaire est M. MM) donne également l'accès à la chambre d'hôtel numéro 112 du Grand Hotel pour la nuit du 25 au 26 octobre. De même, on peut voir que l'identifiant graphique dont les données sont RRTPL2710 (Train Paris Lyon le 27 octobre dont le bénéficiaire est M. PP) donne également l'accès à un vol Lyon Paris le 29 octobre à 20h00.

A l'étape 2.5, le serveur 2 transmet les données d'association comprenant les données du code graphique et les caractéristiques du second service, au serveur de contrôle 6 gérant l'accès à ce second service.

L'utilisateur peut être informé par le personnel gérant le moyen de transport qu'un autre service lui est offert.

Selon une variante de réalisation, l'utilisateur reçoit sur son téléphone mobile (dont le numéro est dans la mémoire du serveur 2) un message l'informant des éléments pour trouver ce service (étape 2.6). Un exemple d'un message s'affichant sur l'écran du téléphone portable de l'utilisateur est montré à la **FIG. 4****.** Selon cet exemple, ces éléments sont :
- l'adresse et le nom de l'hôtel,
- le numéro de chambre,
- les horaires d'accès,
- des informations complémentaires sur le service délivré.

L'utilisateur se rend alors sur le lieu où il peut bénéficier du service proposé et présente son titre de transport devant le lecteur optique du boîtier électrique 9 qui délivre le service proposé, en l'occurrence l'accès à la chambre d'hôtel proposée. A l'étape 2.7, le lecteur optique détecte la présence d'un code graphique devant son objectif, le scanne et transmet les informations au serveur de contrôle 6. Ce dernier compare les données du code scanné et les données du code reçu (étape 2.8), et en cas d'égalité, vérifie que le boîtier qui a transmis l'information contrôle l'accès à la chambre indiquée dans les données d'association. En cas d'égalité, le serveur de contrôle accorde l'accès et envoie un signal de déverrouillage de la gâche électrique 10 au boîtier électronique 9. L'utilisateur peut alors entrer dans sa chambre, et ainsi bénéficier de ce second service (étape 2.9).

Selon un perfectionnement considéré comme une option, les données d'association incluent l'heure du début et de fin d'autorisation du second service, typiquement dans le cas d'une chambre c'est de 18h00 jusqu'à midi le lendemain. Lorsque l'heure de fin d'autorisation est passée, les données d'association sont effacées de la mémoire du serveur (étape 2.10). Si le second service est un ou plusieurs autres voyages, le moment de fin d'autorisation est défini par les dates et heures du dernier voyage. On peut ainsi constater que l'utilisateur se sert de son billet d'avion, ou de train pour ouvrir sa chambre d'hôtel de la même façon que s'il avait reçu une clef de l'accueil de cet hôtel.

Selon une variante de réalisation, le serveur de contrôle 6 transmet les données d'association au boîtier électronique 9 qui délivre le service proposé, en l'occurrence l'accès à la chambre d'hôtel proposée. Dans ce cas, le boîtier 9 compare le code lu par le lecteur optique avec le code transmis par le serveur de contrôle et stocké dans sa mémoire.

Si l'utilisateur a commandé plusieurs titres de transport en même temps pour des personnes l'accompagnant, le procédé objet de la présente invention propose plusieurs accès à des locaux déterminés. L'utilisateur peut ainsi choisir s'il partage sa chambre avec quelqu'un ou non. Il peut aussi décider qu'il aura l'accès à l'ensemble des locaux déterminés, c'est le cas d'un parent qui voyage avec ses enfants.

Dans un autre mode de mise en oeuvre de l'invention et dans le cas où le serveur de contrôle 6 gère l'accès à une pluralité de locaux déterminés à l'aide de boîtiers lecteur de code graphique, chaque boitier transmet au serveur les données des codes lus. Si l'utilisateur se trompe de local, le serveur de contrôle identifie cet utilisateur et retrouve dans sa mémoire le local auquel a accès cet utilisateur. Dans ce cas, le serveur de contrôle 6 envoie pour affichage sur le boîtier électronique 9 un message indiquant le numéro ou la localisation précise du bon local. Le message affiché sur l'écran du boitier qui a lu le code erroné est par exemple :
« Cette chambre n'est pas celle sélectionnée pour vous
« Veuillez-vous présenter à la chambre 111 »

Puisque le serveur connaît la langue de l'utilisateur qui a présenté le code graphique, le message est affiché dans cette langue.

Si l'utilisateur se présente plus tôt que l'heure du début d'autorisation du second service spécifiée dans les données d'association, un message informant ce fait est affiché. Le message affiché sur l'écran du boîtier contrôlant l'accès à la chambre sélectionnée est du type :
« Cette chambre qui vous est réservée sera libre qu'à partir de 20h00.
« Merci de patienter»

Lorsque l'utilisateur se présente devant le local sélectionné, le serveur de contrôle 6 transmet certaines informations relatives à cet utilisateur aux différents systèmes de gestion des chambres. Par exemple, le thermostat électronique de la chambre sélectionnée reçoit la température favorite de l'utilisateur, de cette manière ce dernier n'a pas besoin de programmer manuellement le système de climatisation. De même, le serveur de contrôle informe le système de gestion des téléviseurs de l'identité de l'utilisateur et de sa chaîne favorite. De cette manière, l'utilisateur voit une fenêtre d'affichage lui souhaitant la bienvenue, et en fond d'écran, le programme audiovisuel diffusé par sa chaîne favorite.

Le coupon d'accès 5 permet également l'accès à d'autres services que celui d'un local déterminé. Si l'utilisateur dispose d'une voiture qu'il a signalée au voyagiste, le serveur 2 transmet cette information au serveur de contrôle 6 qui accorde l'accès au parking lorsque le code graphique de cet utilisateur est présenté devant le lecteur optique du boîtier électronique 9 contrôlant d'accès au parking. De même, l'utilisateur signale sa présence au restaurant en présentant son titre de transport devant un lecteur. La facture de restaurant est alors associée à cet utilisateur.

Selon un mode particulier de réalisation, le boîtier électronique 9 autorise en permanence l'accès à la chambre à des personnes habilitée, par exemple le personnel de ménage.

Selon un autre mode de réalisation, l'accès permanent est soumis à la condition que le local est inoccupé. Lorsque le boîtier autorise l'utilisateur à accéder à la chambre, ce local devient occupé et de ce fait, le personnel d'entretien n'y a plus accès. Un lecteur est également disposé à l'intérieur de la chambre permettant à son occupant de la libérer. Une variante consiste en ce que l'utilisateur appuie sur un bouton marqué « Sortie » placé sur ou à proximité du boîtier 9 pour indiquer son départ. En sortant, le boîtier 9 envoie un signal au serveur de contrôle 6 indiquant que la chambre est désormais inoccupée. De cette manière, le serveur de contrôle peut avertir par le personnel d'entretien que la chambre peut être nettoyée. Cette information est transmise par message vocal sur le téléphone portable du personnel ou par message textuel. Le personnel d'entretien dispose de badges comprenant des QR Code qui sont lus par les boîtiers 9. A chaque lecture, le boîtier transmet les données au serveur de contrôle 6 qui vérifie ainsi que ces données correspondent à celles d'un personnel d'entretien. De cette manière, le serveur de contrôle est informé en permanence de l'occupation de chaque chambre et peut gérer leur entretien de façon optimale.

Avantageusement, le boîtier 9 dispose d'un menu et de touches permettant à l'utilisateur qui quitte la chambre de déclencher le contrôle de sortie (« Check out » en langue Anglo-saxonne) et ainsi de minimiser le temps des opérations de sortie.

## Revendications

1. Procédé de contrôle d'accès à un local déterminé (7) pour un utilisateur incluant une étape préalable de création par un serveur de gestion des services (2) d'un coupon d'accès (5) pour donner l'accès à un voyage **caractérisé par** son lieu de départ et son lieu d'arrivée, et une étape de calcul d'un identifiant graphique encodant des données identifiant l'utilisateur et des caractéristiques dudit voyage dont le lieu de départ et le lieu d'arrivée, l'identifiant graphique étant intégré dans ledit coupon d'accès et associé avec des informations permettant d'effectuer ledit voyage, la lecture du coupon d'accès reproduit sur le support donnant l'accès au voyage pour cet utilisateur identifié par le coupon d'accès ; comportant :
une étape ultérieure d'association de l'identifiant graphique à un droit d'accès au local déterminé par le serveur de gestion des services (2),
une étape de récupération par un serveur de contrôle (6) contrôlant l'accès au local déterminé des données d'association incluant l'identifiant graphique,
une étape de lecture de l'identifiant graphique intégré dans le coupon à au moins ce local,
une étape de comparaison comparant les données de l'identifiant graphique lu du coupon et les données de l'identifiant graphique contenues dans les données d'association et,
une étape ultérieure de déblocage d'une gâche électrique (10) par le serveur de contrôle (2) déclenchée par la lecture dudit identifiant graphique reproduit sur un support pour permettre l'accès à au moins ce local et par l'égalité entre les données comparées.

2. Procédé de contrôle d'accès à un local selon la revendication 1 ; **caractérisé en ce qu'**il comporte une étape de réception et de reproduction sur un téléphone portable dudit coupon, la lecture du coupon sur le téléphone portable autorisant l'accès à au moins ce local.

3. Procédé de contrôle d'accès selon l'une quelconque des revendications précédente, **caractérisé en ce que** le moment au cours duquel l'accès est accordé au local dépend de l'identité de l'utilisateur associé au coupon d'accès.

4. Procédé de contrôle d'accès selon l'une quelconque des revendications précédente, **caractérisé en ce qu'**il comporte une étape d'introduction d'une commande par l'utilisateur indiquant qu'il quitte le local, ladite étape d'introduction déclenchant l'émission d'un signal indiquant à d'autres personnes ayant une autorisation permanente que l'accès audit local est possible.

5. Système de contrôle d'accès à un local déterminé (7) pour un utilisateur comprenant un serveur de gestion des services (2) créant un coupon d'accès (5) pour donner l'accès à un voyage **caractérisé par** son lieu de départ et son lieu d'arrivée, et un moyen de calcul d'un identifiant graphique encodant des données identifiant l'utilisateur et des caractéristiques dudit voyage dont le lieu de départ et le lieu d'arrivée, l'identifiant graphique étant intégré dans ledit coupon d'accès et associé avec des informations permettant d'effectuer ledit voyage, de la lecture du coupon d'accès reproduit sur un support donnant l'accès au voyage pour cet utilisateur identifié par le coupon d' accès,
le serveur de gestion des services (2) associant l'identifiant graphique à un droit d'accès au local déterminé, celui-ci comportant un moyen de récupération par un serveur de contrôle (6) contrôlant l'accès au local déterminé des données d'association incluant l'identifiant graphique,
un lecteur optique destiné à lire l'identifiant graphique intégré dans le coupon à au moins ce local,
un moyen de comparaison comparant les données de l'identifiant graphique lu du coupon et les données de l'identifiant graphique contenues dans les données d'association et,
un boîtier (9) de commande d'une gâche électrique (10) placé à au moins ce local, le coupon permettant l'accès à ce local, l'égalité entre les données comparées déclenchant l'émission par ledit boîtier (9) d'un signal de déblocage de la gâche électrique (10).

6. Programme d'ordinateur **caractérisé en ce qu'**il comprend des instructions de code de programme pour la mise en oeuvre d'une étape de contrôle d'accès incluse dans un procédé selon l'une quelconque des revendications 1 à 4 lorsque ce programme est exécuté par un processeur.

## Patentansprüche

1. Zugangskontrollverfahren zu einem bestimmten Raum (7) für einen Nutzer, das einen Vorabschritt der Erzeugung eines Zugangsgutscheins (5) durch einen Dienstleistungsmanagementserver (2), um Zugang zu einer Reise zu gewähren, die durch ihren Abreiseort und ihren Ankunftsort gekennzeichnet ist, sowie einen Schritt zur Berechnung eines grafischen Kennzeichens umfasst, das Daten verschlüsselt, die den Nutzer und die Kennzeichen der Reise, darunter den Abreiseort und den Ankunftsort, identifizieren, wobei das grafische Kennzeichen in den Zugangsgutschein integriert und mit Informationen verknüpft ist, die es erlauben, die Reise durchzuführen, wobei das Lesen des Zugangsgutscheins, der auf dem Träger reproduziert ist, den Zugang zu der Reise für den durch den Zugangsgutschein identifizierten Nutzer gewährt,
umfassend:
einen nachfolgenden Schritt der Verknüpfung des grafischen Kennzeichens mit einem Zugangsrecht zu dem bestimmten Raum durch den Dienstleistungsmanagementserver (2),
einen Schritt der Wiedergewinnung der Verknüpfungsdaten einschließlich des grafischen Kennzeichens durch einen Kontrollserver (6), der den Zugang zu dem bestimmten Raum kontrolliert,
einen Schritt des Lesens des grafischen Kennzeichens, das in dem Gutschein integriert ist an wenigstens diesem Raum,
einen Schritt des Vergleichens, der die Daten des grafischen Kennzeichens, das von dem Gutschein abgelesen wird, mit den Daten des grafischen Kennzeichens, die in den Verknüpfungsdaten enthalten sind, vergleicht und
einen nachfolgenden Schritt der Entriegelung eines elektrischen Türöffners (10) durch den Kontrollserver (2), wobei der Schritt durch das Lesen des grafischen Kennzeichens, das auf einem Träger reproduziert ist, um den Zugang zu wenigstens diesem Raum zu gewähren, und durch die Übereinstimmung zwischen den verglichenen Daten ausgelöst wird.

2. Zugangskontrollverfahren zu einem Raum nach Anspruch 1, **dadurch gekennzeichnet, dass** es einen Schritt des Empfangs und der Wiedergabe des Gutscheins auf einem Mobiltelefon umfasst, wobei das Lesen des Gutscheins auf dem Mobiltelefon den Zugang zu wenigstens diesem Raum erlaubt.

3. Zugangskontrollverfahren nach einem der vorstehenden Ansprüche,
**dadurch gekennzeichnet, dass** der Zeitpunkt zu dem der Zugang zu dem Raum gewährt wird, von der Identität des Nutzers abhängt, die mit dem Zugangsgutschein verknüpft ist.

4. Zugangskontrollverfahren nach einem der vorstehenden Ansprüche,
**dadurch gekennzeichnet, dass** es einen Schritt zur Eingabe eines Befehls durch den Nutzer umfasst, der anzeigt, dass er den Raum verlässt, wobei der Eingabeschritt die Abgabe eines Signals auslöst, das anderen Personen anzeigt, die eine permanente Erlaubnis haben, dass der Zugang zu dem Raum möglich ist.

5. Zugangskontrollsystem zu einem bestimmten Raum (7) für einen Nutzer, das einen Dienstleistungsmanagementserver (2) umfasst, der einen Zugangsgutschein (5) erzeugt, um den Zugang zu einer Reise zu geben, die durch ihren Abreiseort und ihren Ankunftsort gekennzeichnet ist, sowie ein Mittel zur Berechnung eines grafischen Kennzeichens, das Daten verschlüsselt, die den Nutzer und die Kennzeichen der Reise, darunter den Abreiseort und den Ankunftsort, identifizieren, wobei das grafische Kennzeichen in den Zugangsgutschein integriert und mit Informationen verknüpft ist, die es erlauben, die Reise durchzuführen, wobei durch das Lesen des Zugangsgutscheins, der auf dem Träger reproduziert ist, den Zugang zu der Reise für den durch den Zugangsgutschein identifizierten Nutzer gewährt,
wobei der Dienstleistungsmanagementserver (2), der das grafische Kennzeichen mit einem Zugangsrecht zu dem bestimmten Raum verknüpft, ein Mittel zur Wiedergewinnung der Verknüpfungsdaten einschließlich des grafischen Kennzeichens durch einen Kontrollserver (6) aufweist, der den Zugang zu dem bestimmten Raum kontrolliert,
einen optischen Leser, der dazu bestimmt ist, das in dem Gutschein integrierte grafische Kennzeichen an dem wenigstens einen Raum zu lesen,
ein Vergleichsmittel, das die Daten des grafischen Kennzeichens, die aus dem Gutschein ausgelesen wurden, mit den Daten des grafischen Kennzeichens vergleicht, die in den Verknüpfungsdaten enthalten sind, und
ein in dem wenigstens einen Raum angeordneter Steuerkasten (9) eines elektrischen Türöffners (10), wobei der Gutschein den Zugang zu diesem Raum gewährt, wobei die Übereinstimmung zwischen den verglichenen Daten die Abgabe eines Entriegelungssignals durch den Kasten (9) für die elektronische Zugangskontrolle (10) auslöst.

6. Computerprogramm, **dadurch gekennzeichnet, dass** es Programmcodeinstruktionen für die Ausführung eines Schrittes der Zugangskontrolle umfasst, der in einem Verfahren gemäß der Ansprüche 1 bis 4 enthalten ist, wenn das Programm von einem Prozessor ausgeführt wird.

## Claims

1. A method for controlling access to specific premise (7) for a user including a preliminary step of creation by a services management server (2) of an access coupon (5) to provide access to a journey **characterised by** its place of departure and its place of arrival, and a step of calculating a graphic identifier encoding data identifying the user and characteristics of said journey including the place of departure and place of arrival, the graphic identifier being integrated into said access coupon and associated with information allowing said journey to be made, the reading of the access coupon reproduced on the support giving access to the journey for this user identified by the access coupon; comprising
a subsequent step of associating the graphic identifier with a right of access to the specific premise by the services management server (2);
a step of retrieval by a control server (6) controlling access to the specific premise of association data including the graphic identifier;
a step of reading the graphic identifier integrated into the coupon at, at least, this premise;
a comparison step comparing the data of the graphic identifier read from the coupon and the data of the graphic identifier contained in the association data; and
a subsequent step of releasing an electric latch (10) by the control server triggered by the reading of said graphic identifier reproduced on a support to allow access to at least this premise and by the equalité of the data compared.

2. The method of controlling access to specific premise according to Claim 1, **characterised in that** it comprises a step of receiving and reproducing said coupon on a mobile telephone, the reading of the coupon on the portable telephone authorising access to at least this premise.

3. The method of controlling access according to either of the above claims, **characterised in that** the moment when access is granted to the premise depends on the identity of the user associated with the access coupon.

4. The method of controlling access according to any one of the above claims, **characterised in that** it comprises a step for entry of a command by the user indicating that they are leaving the premise, this entry step triggering the sending of a signal to other persons having a permanent authorisation that access to said premise is possible.

5. A system for controlling access to specific premise (7) by a user comprising a services management server (2) creating an access coupon (5) to provide access to a journey **characterised by** its place of departure and its place of arrival, and a means of calculating a graphic identifier encoding data identifying the user and characteristics of said journey including the place of departure and the place of arrival, the graphic identifier being integrated into said access coupon and associated with information allowing said journey to be made, and reading the access coupon reproduced on a support giving access to the journey to this user identified by the access coupon, the services management server (2) associating the graphic identifier with a right of access to the specific premise, this comprising a means of retrieval by a control server (6) controlling access to the specific premise of the association data including the graphic identifier;
an optical reader intended to read the graphic identifier integrated into the coupon at, at least, this premise;
a comparison means comparing the data of the graphic identifier read from the coupon and the data of the graphic identifier contained in the association data; and
a control unit (9) for an electric latch (10) located at least at this premise, the coupon allowing access to this premise, and the equality of the compared data triggering the sending by said box (9) of a signal releasing the electric latch (10).

6. A computer program, **characterised in that** it comprises programming code instructions for the implementation of an access control step included in a method according to any one of Claims 1 to 4, when the program is executed by a processor.
